# EUROPÄISCHE PATENTSCHRIFT

(11) **EP 3 016 827 B1**
(45) Veröffentlichungstag und Bekanntmachung des Hinweises auf die Patenterteilung: **16.08.2017**
(21) Anmeldenummer: 14734090.5
(22) Anmeldetag: 24.06.2014
(51) Int. Cl.: B60T 7/22, B62D 15/02, B60W 30/085, B60W 30/09, B60W 30/08, B60W 10/18, B60W 10/20

(54) **VERFAHREN UND VORRICHTUNG ZUM BETREIBEN EINES KRAFTFAHRZEUGS IN EINEM AUTOMATISIERTEN FAHRBETRIEB**
METHOD AND DEVICE FOR OPERATING A MOTOR VEHICLE IN AN AUTOMATED DRIVING MODE
PROCÉDÉ ET DISPOSITIF PERMETTANT DE FAIRE FONCTIONNER UN VÉHICULE AUTOMOBILE EN MODE AUTOMATIQUE

(30) Priorität: 04.07.2013 DE 102013213171
(43) Veröffentlichungstag der Anmeldung: 11.05.2016
(73) Patentinhaber: Robert Bosch GmbH, 70442 Stuttgart (DE)
(72) Erfinder: NORDBRUCH, Stefan, 70806 Kornwestheim (DE); HAULER, Florian, 76137 Karlsruhe (DE)
(86) Internationale Anmeldenummer: PCT/EP2014/063242
(87) Internationale Veröffentlichungsnummer: WO 2015/000739

(56) Entgegenhaltungen:
- WO-A1-2013/074034
- DE-A1- 10 144 797
- DE-A1-102011 086 241
- US-A1- 2012 083 959

## Beschreibung

Die vorliegende Erfindung betrifft ein Verfahren und eine Vorrichtung zum Betreiben eines Kraftfahrzeugs in einem automatisierten Fahrbetrieb, bei dem eine Standardtrajektorie ermittelt wird, die eine Fahrzeugführung gemäß der vom Fahrer vorgegebenen Zieleinstellung und der momentanen Umfeldsituation umsetzt, eine Ermittlung einer Sicherheitstrajektorie erfolgt, die ein sicheres Anhalten des Fahrzeugs im Falle eines Notfalls in Abhängigkeit der momentanen Fahrzeugumfeldsituation umsetzt, bei der die Standardtrajektorie an eine erste Regelungseinrichtung und die Sicherheitstrajektorie an eine zweite Regelungseinrichtung weitergegeben werden und im Standardbetrieb die Aktoreinrichtungen zur Fahrzeugführung durch die erste Regelungseinrichtung angesteuert werden und im Sicherheitsfall, wenn der automatisierte Fahrbetrieb nicht sichergestellt werden kann, die Aktoreinrichtungen durch die zweite Regelungseinrichtung angesteuert werden, um das Fahrzeug ohne Gefährdung anzuhalten.

### Stand der Technik

Das Dokument US 2012/083959 A1 offenbart ein Verfahren zum Betreiben eines Kraftfahrzeugs in einem automatisierten Fahrbetrieb, aufweisend die Schritte:
- Ermitteln einer Standardtrajektorie, die eine Fahrzeugführung gemäß der vom Fahrer vorgegebenen Zieleinstellung und der momentanen Fahrzeugumfeldsituation umsetzt und
- Ermitteln einer Sicherheitstrajektorie, die ein sicheres Anhalten des Fahrzeugs in Abhängigkeit der momentanen Fahrzeugumfeldsituation umsetzt,
- Zuführen der Standardtrajektorie an eine erste Regelungseinrichtung, durch die die Signale an Aktoreinrichtungen des Fahrzeugs zur Fahrzeugführung auf Basis der Standardtrajektorie weiterleitbar sind und
- Zuführen der Sicherheitstrajektorie an die Regelungseinrichtung, durch die Signale an Aktoreinrichtungen des Fahrzeugs zur Fahrzeugführung auf Basis der Sicherheitstrajektorie weiterleitbar sind, wobei
- im Standardbetrieb die Aktoreinrichtungen zur Fahrzeugführung durch die erste Regelungseinrichtung angesteuert werden und
- die Aktoreinrichtungen durch die Regelungseinrichtung angesteuert werden um das Fahrzeug ohne Gefährdung anzuhalten.

Aus der DE 10 2011 086 241 A1 ist eine Recheneinheit und ein zugehöriges Verfahren zum sicheren Abstellen eines Fahrzeugs bekannt, bei dem überprüft wird, ob eine Notsituation vorliegt und nach Erkennen einer Notsituation ein Fahrerassistenzsystem das Fahrzeug an einen Straßenrand fährt, indem Informationen aus einer externen Datenbank abgefragt werden und vom Fahrerassistenzsystem berücksichtigt werden.

### Offenbarung der Erfindung

Der Kern der vorliegenden Erfindung ist es, ein Verfahren und ein zugehöriges System anzugeben, das in der Lage ist, ein Fahrzeug selbstständig zu führen und das weiterhin in der Lage ist zu erkennen, ob eine Notsituation, in der das Fahrzeug nicht mehr selbstständig geführt werden kann, vorliegt und das Verfahren bzw. das System derart ausgeprägt sind, dass in dieser Notsitation das Fahrzeug sicher angehalten werden kann, ohne die Fahrzeuginsassen oder weitere Verkehrsteilnehmer zu gefährden. Erfindungsgemäß wird dieses durch die Merkmale der unabhängigen Ansprüche gelöst. Vorteilhafte Weiterbildungen und Ausgestaltungen ergeben sich aus den Unteransprüchen.

Erfindungsgemäß wird die beschriebe Aufgabe dadurch gelöst, dass durch ein Trajektorienplanungsmodul eine Standardtrajektorie und eine Sicherheitstrajektorie bestimmt werden. Die Standardtrajektorie beschreibt den geplanten Fahrweg des Fahrzeugs im Rahmen einer unmittelbar vorausliegenden Wegstrecke, um das Fahrzeug zu einem, durch den Fahrer vorher eingegebenen Zielpunkt zu bewegen. Die Sicherheitstrajektorie betrifft dabei den unmittelbar vorausliegenden Fahrweg des Fahrzeugs, der vorteilhafter Weise einzuschlagen ist, falls eine Notsituation vorliegt, in der das Fahrzeug nicht mehr automatisch betrieben werden kann und ein sicheres Abstellen des Fahrzeugs an der nächstgelegenen, geeigneten Anhalteposition betrifft. Die Standardtrajektorie wird einer ersten Regelungseinrichtung zugeführt, in der auf Grundlage der Standardtrajektorie Signale für Aktoreinrichtungen des Fahrzeugs ermittelt werden und an nachgeordnete Aktoreinrichtungen ausgegeben werden. Diese Aktoreinrichtungen betreffen sowohl die Fahrzeuglängsführung, also die Regelung der Geschwindigkeit und der Beschleunigung, des Fahrzeugs in Fahrtrichtung, als auch die Fahrzeugquerregelung, also die Ansteuerung von Lenkaktuatoren, um das Fahrzeug in seiner Richtung zu beeinflussen und auf der momentan befahrenen Fahrspur zu halten bzw. gezielte Richtungsänderungen durchzuführen. Der Begriff der Beschleunigung wird im Rahmen der vorliegenden Anmeldung dabei im Sinne positiver als auch negativer Beschleunigungswerte verwendet und schließt damit auch Verzögerungen mit ein. Die parallel im normalen Fahrbetrieb berechnete Sicherheitstrajektorie wird an eine zweite Regelungseinrichtung weitergegeben, die auf Grundlage dieser Sicherheitstrajektorie ebenfalls Signale für nachgeordnete Aktoreinrichtungen ermittelt. Diese Signale für nachgeordnete Aktoreinrichtungen, die auf der Sicherheitstrajektorie basieren, werden jedoch durch die zweite Regelungseinrichtung solange nicht an die nachgeordneten Aktoren umgesetzt, solange das Fahrzeug im automatisierten Fahrbetrieb geführt werden kann.

Vorteilhafter Weise geschieht das Anhalten des Fahrzeugs mittels der Sicherheitstrajektorie, die der zweiten Regelungseinrichtung zugeführt wurde. Dabei ist es besonders vorteilhaft, dass bei Eintritt des Sicherheitsfalls, also der Situation, dass das Fahrzeug mittels der Sicherheitstrajektorie angehalten werden muss, die Sicherheitstrajektorie bereits in der zweiten Regelungseinrichtung abgelegt wurde und damit eine Umschaltung auf den Sicherheitsbetrieb ohne Zeitverzögerung erfolgen kann.

Weiterhin ist es vorteilhaft, dass die AKtoreinrichtungen des Fahrzeugs durch die erste Regelungseinrichtung oder durch die zweite Regelungseinrichtung zur Beeinflussung der Fahrzeuglängsdynamik und der Fahrzeugquerdynamik ansteuerbar sind. Aktoren zur Fahrzeuglängsdynamikbeeinflussung sind Einrichtungen, die die Fahrzeuggeschwindigkeit sowie die Fahrzeugbeschleunigung verändern können und Einrichtungen zur Fahrzeugquerdynamikbeeinflussung sind in Einrichtungen, die die Fahrzeuglenkung ansteuern können um das Fahrzeug gezielt in seiner Fahrtrichtung zu beeinflussen. Die Fahrzeuglängsdynamikaktuatorik, die durch die erste Regelungseinrichtung bzw. die zweite Regelungseinrichtung ansteuerbar sind, können dabei getrennte Aktuatoren sein, die voneinander unabhängig die Fahrzeuglängsdynamik, sprich die Geschwindigkeit, die Beschleunigung bzw. Verzögerung mittels getrennter Einrichtungen verändern können. Weiterhin ist es denkbar, dass die Aktuatorik, die durch die erste Regelungseinrichtung und die zweite Regelungseinrichtung angesteuert werden kann, aus einem einzigen Aktuator besteht, der jedoch zwei voneinander unabhängige Eingänge besitzt, so dass bei Ausfall des einen Signalpfads der Aktuator durch den zweiten Signalpfad ohne Einschränkung seine Funktionalität beibehält. Beispielsweise ist eine derartige Aktuatorik umsetzbar, indem Elektromotoren mit Doppelwicklungen verwendet werden oder getrennte Elektromotoren verwendet werden, bei denen der eine Motor im Freilauf bleibt, solange der andere Motor die Einstellung des Aktuators verändert.

Weiterhin ist es vorteilhaft, dass die erste Regelungseinrichtung von der zweiten Regelungseinrichtung unabhängig arbeitet. Dies kann erreicht werden, indem zwei selbstständige und voneinander unabhängige Geräte vorgesehen sind. Dies kann jedoch auch umgesetzt werden, indem ein gemeinsames Gehäuse verwendet wird, in dem zwei voneinander getrennte Steuergeräteschaltkreise untergebracht sind. Dabei ist es ebenfalls wichtig, dass die Versorgungsleitungen sowie die Ein- und Ausgangssignalleitungen für die beiden Regelungseinrichtungen getrennt sind und nicht auf gemeinsame Ressourcen zurückgreifen.

Weiterhin ist es vorteilhaft, dass die Kommunikationseinrichtungen zwischen der ersten Regelungseinrichtung und den Aktoreinrichtungen zur Fahrzeugführung unabhängig von den Kommunikationseinrichtungen zwischen der zweiten Regelungseinrichtung und den Aktoreinrichtungen zur Fahrzeugführung sind. Hierdurch wird erreicht, dass nicht nur die Berechnung der Stellsignale für die Aktuatorik voneinander unabhängig sind, sondern auch die Übertragungswege für diese Signale eine Redundanz aufweisen und somit im Fall, dass ein Kabelschaden auftritt oder nicht nur ein Steuergerät sondern eine ganze Gruppe von Steuergeräten ausfällt, dennoch eine sichere Funktionsweise eines automatisiert betriebenen Fahrzeugs sichergestellt werden kann.

Besonders vorteilhaft ist es, dass die erste Regelungseinrichtung bzw. die zweite Regelungseinrichtung an voneinander getrennte Versorgungsnetze angeschlossen sind, so dass auch bei Ausfall der Energieversorgung ein sicherere Fahrbetrieb, zumindest bis zur nächsten Notanhalteposition, ermöglicht ist.

Weiterhin ist es vorteilhaft, dass neben der Umfeldsensorik, die für den automatisierten Fahrbetrieb im Normalbetrieb vorgesehen ist, ein weiterer Umfeldsensor oder mehrere weitere Umfeldsensoren vorgesehen sind, deren Signale im normalen Fahrbetrieb nicht zur Fahrzeugführung benötigt werden. Dieser weitere Umfeldsensor oder die mehreren weiteren Umfeldsensoren sind dabei Einrichtungen, die eine unmittelbar bevorstehende Kollision mit einem Objekt im Fahrzeugumfeld erkennen können und diese Signale direkt der zweiten Steuereinrichtung zuführen, die im Sicherheitsfall das Fahrzeug an der nächstgelegenen Anhalteposition zum Stehen bringt. Damit ist es möglich, auf Basis der durch den weiteren Umfeldsensor oder mehreren weiteren Umfeldsensoren gelieferten Informationen im Bedarfsfall während dem Notanhaltebetrieb eine automatische Notbremsung durchzuführen, um eine Kollision des Fahrzeugs im Notfallbetrieb zu vermeiden oder zumindest die Kollisionsfolgen einer nicht mehr vermeidbaren Kollision zu mindern. Dieser weitere Umfeldsensor bzw. diese mehreren weiteren Umfeldsensoren können beispielsweise Sensoriken auf Basis von Lidarsensorik, Radarsensorik, Ultraschallsensorik, Video- oder Stereovideosensorik sein.

Von besonderer Bedeutung ist die Realisierung des erfindungsgemäßen Verfahrens in der Form eines Steuerelements, das für ein Steuergerät einer automatischen Fahrzeugführung für ein Kraftfahrzeug vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Kurze Beschreibung der Zeichnungen

Nachfolgend werden Ausführungsbeispiele der Erfindung anhand von Zeichnungen erläutert. Es zeigen
- Figur 1: eine prinzipielle Darstellung eines erfindungsgemäßen automatisierten Kraftfahrzeugs in einem regulären Modus und einem Fehlerfall,
- Figur 2: ein prinzipielles Blockschaltbild einer Ausführungsform der erfindungsgemäßen Vorrichtung.

### Ausführungsformen der Erfindung

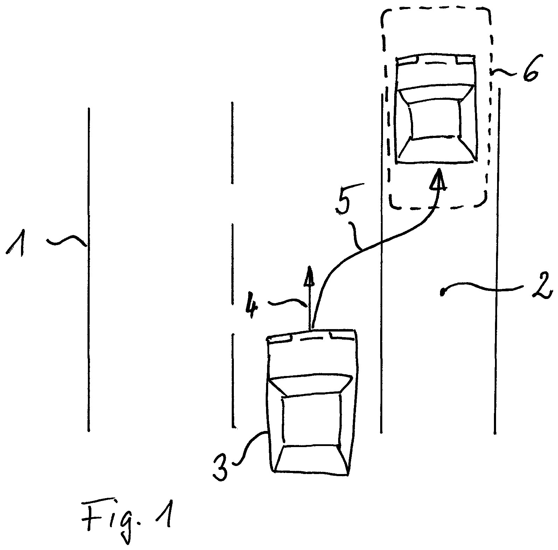

In Figur 1 ist eine Fahrbahn 1 dargestellt, auf der sich ein Fahrzeug 3 fortbewegt. Das Fahrzeug 3 ist dabei in der Lage, selbstständig in einem automatisierten Fahrbetrieb zu fahren. Nachdem der Fahrer ein Ziel eingegeben hat, wird stückweise eine Trajektorie berechnet, auf deren Grundlage Steuerbefehle für die Aktuatorik des Fahrzeugs bestimmt werden. Für die Fortbewegung des Fahrzeugs 3 im Normalbetrieb des automatisierten Fahrbetriebs wurde eine Trajektorie 4 ermittelt, die das Fahrzeug entlang der Fahrbahn 1 führt und im Beispiel des dargestellten Abschnitts in etwa einer Geradeausfahrt entspricht. Gleichzeitig wird mittels der im Fahrzeug vorhandenen Umfeldsensorik erkannt, dass rechts neben der Fahrbahn 1 ein sicherer Anhaltebereich 2 existiert. Dieser Anhaltebereich 2 kann beispielsweise eine Pannenspur auf einer Autobahn oder einer autobahnähnlich ausgebauten Bundesstrasse sein, es kann sich dabei jedoch auch um eine Nothaltebucht, um ein befestigtes Fahrbahnbankett, um einen Parkplatz, beispielsweise parallel zur Fahrtrichtung orientiert, oder um eine einmündende Einfahrt handeln. Gleichzeitig zur Ermittlung der Standardtrajektorie 4 wird kontinuierlich auch eine Sicherheitstrajektorie 5 ermittelt. Diese Sicherheitstrajektorie 5 entsteht, indem die Umfeldsensorik in Verbindung mit dem Ortungssystem, das die eigene Position unter Zuhilfenahme hochgenauer Karteninformationen ermittelt, nach dem nächstmöglichen, sicheren Anhaltebereich 2 sucht und eine Alternativtrajektorie, nämlich die Sicherheitstrajektorie 5 bestimmt, die ein Überführen des Fahrzeugs 3 aus der Momentanposition in eine Anhalteposition 6 betrifft. Wird im weiteren Fahrbetrieb erkannt, dass das Fahrzeug 3 nicht mehr im automatisierten Fahrbetrieb entlang der Trajektorie 4 dauerhaft betreibbar ist, so schaltet die Fahrzeugführung auf den Notbetrieb um und es wird das Fahrzeug 3 entlang der Sicherheitstrajektorie 5 zur nächsten Anhalteposition 6 geführt, wo das Fahrzeug automatisch in einen sicheren Stillstand gebracht wird. Dieser Notbetrieb kann durch den Ausfall einer Systemkomponente für das automatisierte Fahren entstehen, es ist jedoch auch denkbar, dass eine entfernte Fahrzeugkomponente ausfällt und einen Teil des Bordnetzes zur Abschaltung bringt oder dass aufgrund einer besonders komplexen Umfeldsituation oder aufgrund des Fehlens betriebsnotwendiger Daten eine Weiterfahrt im automatisierten Betrieb nicht mehr möglich ist.

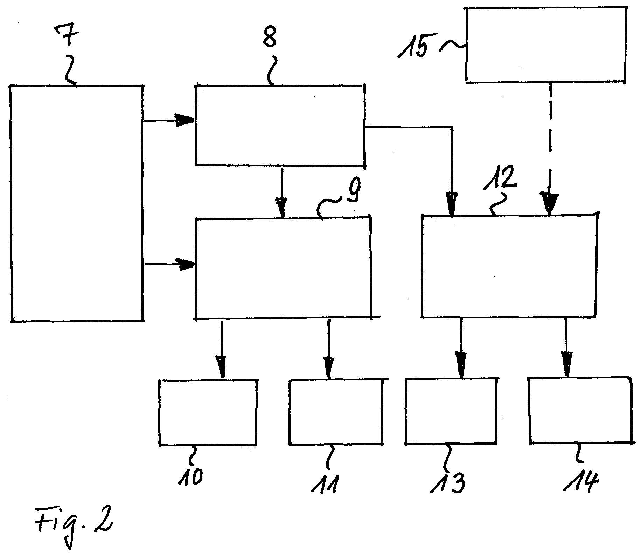

In Figur 2 ist dargestellt, wie ein beschriebenes System zur automatischen Fahrzeugführung und zum automatischen, sicheren Anhalten des Fahrzeugs 3 ausgeführt sein kann. So ist das Modul 7 dargestellt, das eine Positionsbestimmung, Routenplanung und Umfeldsensorik umfasst. Dieses Modul 7 ermittelt die momentane Position des Fahrzeugs 3, ermittelt aufgrund der momentanen Position und der eingegebenen Zielposition eine geplante Fahrtroute, indem auf gespeicherte oder von einem externen Datenserver geladene Kartendaten zurückgegriffen wird und sendet diese Routeninformation an ein Trajektorienplanungsmodul 8 sowie an eine erste Regelungseinrichtung 9. Weiterhin verfügt das Fahrzeug 3 über eine Umfeldsensorik, die Objekte im Fahrzeugumfeld erfasst und Positions- sowie Bewegungsdaten dieser Objekte zur Verfügung stellt. Diese Objekte im Fahrzeugumfeld können weitere Verkehrsteilnehmer, jedoch auch stationäre Objekte wie Bäume, Schilder, Brücken oder Hauswände sein. Weiterhin ist die Umfeldsensorik in der Lage Freiflächen zu erkennen, die durch das Fahrzeug befahrbar sind und der Trajektorienplanung dienen. Diese Objektdaten bezüglich im Fahrzeugumfeld befindlichen Objekten und Freiflächen werden ebenfalls vom Modul 7 an das Trajektorienplanungsmodul 8 sowie die erste Regelungseinrichtung 9 weitergegeben. Im Trajektorienplanungsmodul 8 wird nun auf Grundlage der zugeführten Routendaten und Objektdaten eine Standardtrajektorie 4 ermittelt, die eine geplante Bewegung des Fahrzeugs 3 in Längsrichtung und Querrichtung für einen vorausliegenden Streckenteilabschnitt betrifft und die geographischen Gegebenheiten sowie die momentan vorhandene Objektsituation berücksichtigt. Weiterhin wird durch das Trajektorienplanungsmodul 8 kontinuierlich eine Sicherheitstrajektorie 5 ermittelt, für deren Ermittlung die nächste, geeignete Anhalteposition 6 ermittelt wird und die Fahrzeugbewegung des Fahrzeugs 3 so vorausgeplant wird, dass das Fahrzeug 3 auf dieser Anhalteposition 6 sicher zum Stillstand gebracht werden kann. Diese Sicherheitstrajektorie 5 wird vom Trajektorienplanungsmodul 8 an die zweite Regelungseinrichtung 12 weitergegeben, die parallel und redundant zur ersten Regelungseinrichtung 9 eingerichtet ist. In der ersten Regelungseinrichtung 9 wird aus der vom Trajektorienplanungsmodul 8 zugeführten Standardtrajektorie 4 ermittelt, wann und in welchem Ausmaß Aktoren anzusteuern sind, um das Fahrzeug 3 entlang der vorausberechneten Standardtrajektorie 4 zu führen. Das Ermitteln dieser Signale für Aktoreinrichtungen setzt die genaue Kenntnis des momentanen Aufenthaltsortes voraus, so dass vom Positionsbestimmungsmodul und Routenplanungsmodul und Umfeldsensorikmodul 7 zusätzlich die Positionsinformation zugeführt wird.

Die erste Regelungseinrichtung 9 berechnet nun Signale, mittels denen die Antriebseinrichtungen und Verzögerungseinrichtungen des Fahrzeugs angesteuert werden müssen, um die vorausberechnete Längsdynamik des Fahrzeugs umzusetzen. Zeitgleich wird ermittelt, welche Lenkbewegungen die Lenkaktorik ausführen muss, um das Fahrzeug 3 auf der Standardtrajektorie 4 zu führen. Der nachgeordnete Längsaktuator 10, der alternativ auch aus mehreren Einzelaktuatoren bestehen kann, setzt die Steuerbefehle für die Längsdynamik des Fahrzeugs 3 in Geschwindigkeiten, Beschleunigungen, einschließlich Verzögerungen sowie Veränderungen der Getriebeübersetzung um, so dass das Fahrzeug 3 gemäß der Standardtrajektorie 4 geführt wird. Ebenso setzt der Queraktuator 11 die von der ersten Regelungseinrichtung 9 erhaltenen Steuersignale für die Querdynamik des Fahrzeugs in Lenkbewegungen um, so dass das Fahrzeug 3 im Zusammenspiel mit der Längsdynamik entlang der Standardtrajektorie 4 geführt wird. Die der zweiten Regelungseinrichtung 12 zugeführte Sicherheitstrajektorie 5 wird ebenfalls in Steuersignale für Längsaktuatoren 13 und Queraktuatoren 14 umgesetzt, jedoch werden diese Steuersignale für Aktuatoren im Normalbetriebsfall nicht ausgegeben oder weiterverarbeitet.

Wird im Fahrzeug 3 erkannt, dass der automatisierte Fahrbetrieb nicht beibehalten werden kann, beispielsweise weil eine der Komponenten, die hierfür notwendig sind, ausgefallen ist oder eine sonstige Störung des automatischen Fahrzeugbetriebs vorliegt, so wird die Ausgabe der Steuersignale für Aktoreinrichtungen aus der ersten Regelungseinrichtung 9 in Echtzeit umgeschaltet auf die Ausgabe der Steuersignale für Aktoreinrichtungen in der zweiten Regelungseinrichtung 12, so dass ohne Zeitverzögerung das Fahrzeug 3 gemäß der vorberechneten Sicherheitstrajektorie 5 sicher am nächstgelegenen Anhaltepunkt 6 in den sicheren Stillstand überführt werden kann. Der redundante Längsaktuator 13, der alternativ auch aus mehreren Aktuatoren für Motorsteuerung, Bremsensteuerung und Getriebesteuerung bestehen kann, kann dabei parallel und unabhängig zum Längsaktuator bzw. zu den mehreren Längsaktuatoren 10 für Motorsteuerung, Bremsensteuerung und Getriebesteuerung ausgeführt sein, so dass jeder der beiden Längsaktuatoren 10, 13 unabhängig vom jeweils anderen die Längsaktoren steuern kann. Um Fehlfunktionen zu vermeiden ist lediglich notwendig, dass sichergestellt ist, dass entweder Längsaktuator 10 oder Längsaktuator 13 zum gleichen Zeitpunkt Steuersignale an die Steller umsetzen. Die beiden Längsaktuatoren 10, 13 können auch in einem einzigen Aktuator umgesetzt sein, jedoch ist es dann notwendig, dass dieser gemeinsame Längsaktuator über zwei getrennte Eingangsschaltungen und Ansteuersysteme verfügt, die jeweils für sich und unabhängig voneinander den Aktuator beeinflussen können. Beispielsweise kann dies mit Doppelwicklungen in elektromagnetischen Antriebseinrichtungen realisiert werden. Die gleiche Redundanz, wie sie bezüglich der Längsaktuatoren 10 und 13 beschrieben wurde gilt in gleicher Weise für die Queraktuatorik der Blockschaltsymbole 11 und 14.

Weiterhin kann optional ein weiterer Umfeldsensor 15 vorgesehen sein, der alternativ auch ein Umfeldsensoriksystem, bestehend aus mehreren Einzelsensoren sein kann. Dieser hat die Aufgabe, den unmittelbar vorausliegenden Fahrzeugumfeldbereich hinsichtlich vorhandener Objekte abzutasten und während dem Notfallbetrieb, also in dem Zeitraum, in dem das Fahrzeug 3 entlang der Sicherheitstrajektorie 5 kontrolliert und sicher auf die Anhalteposition 6 geführt wird, sicherzustellen, dass keine Kollision mit einem anderen Objekt erfolgt.. Als Objekt kommt insbesondeere ein anderer Verkehrsteilnehmer oder ein stationäres Objekt in Frage. Erkennt der optionale, zusätzliche Umfeldsensor 15 ein Objekt, das sich im Bereich der Sicherheitstrajektorie 5 vorausbefindet, so kann durch diesen weiteren, zusätzlichen Umfeldsensor 15 eine automatisch eingeleitete und durchgeführte Notfallbremsung ausgelöst werden, um die bevorstehende Kollision zu vermeiden oder zumindest bei einer unvermeidbaren Kollision die entstehenden Kollisionsfolgen zu mindern. Da diese zusätzliche Umfeldsensorik 15 nur für den Notfallbetrieb, also während dem Abfahren der Sicherheitstrajektorie 15 notwendig ist, empfiehlt es sich hierfür einen kostengünstigen und dennoch robusten Sensortyp einzusetzen, wofür beispielsweise ein Lidarsenor oder ein Ultraschallsensor, wie er prinzipiell aus Einparksystemen bekannt ist, eingesetzt werden kann. Andere Sensorarten, beispielsweise eine Stereovideokamera, die aufgrund ihrer zwei Kameras eine eigene Redundanz besitzt, können hierfür jedoch genauso zur Anwendung kommen wie Radarsensoren oder andere Objektdetektionstechniken.

## Patentansprüche

1. Verfahren zum Betreiben eines Kraftfahrzeugs (3) in einem automatisierten Fahrbetrieb, aufweisend die Schritte:
- Ermitteln einer Standardtrajektorie (4), die eine Fahrzeugführung gemäß der vom Fahrer vorgegebenen Zieleinstellung und der momentanen Fahrzeugumfeldsituation umsetzt und
- Ermitteln einer Sicherheitstrajektorie (5), die ein sicheres Anhalten des Fahrzeugs (3) im Falle eines Notfalls in Abhängigkeit der momentanen Fahrzeugumfeldsituation umsetzt,
- Zuführen der Standardtrajektorie (4) an eine erste Regelungseinrichtung (9), durch die die Signale an Aktoreinrichtungen (10, 11, 13, 14) des Fahrzeugs (3) zur Fahrzeugführung auf Basis der Standardtrajektorie (4) weiterleitbar sind und
- Zuführen der Sicherheitstrajektorie (5) an eine zweite Regelungseinrichtung (12), durch die Signale an Aktoreinrichtungen (10, 11, 13, 14) des Fahrzeugs (3) zur Fahrzeugführung auf Basis der Sicherheitstrajektorie (5) weiterleitbar sind,
**dadurch gekennzeichnet, dass**
- im Standardbetrieb die Aktoreinrichtungen (10, 11) zur Fahrzeugführung durch die erste Regelungseinrichtung (9) angesteuert werden und
- im Sicherheitsfall, wenn der automatisierte Fahrbetrieb nicht sichergestellt werden kann, die Aktoreinrichtungen (13, 14) durch die zweite Regelungseinrichtung (12) angesteuert werden um das Fahrzeug (3) ohne Gefährdung anzuhalten.

2. Verfahren nach Anspruch 1, **dadurch gekennzeichnet, dass** das Anhalten des Fahrzeugs (3) mittels der bei Eintritt des Sicherheitsfalls bereits der zweiten Regelungseinrichtung (12) zugeführten Sicherheitstrajektorie (5) geschieht.

3. Verfahren nach Anspruch 1 oder 2, **dadurch gekennzeichnet, dass** die Aktoreinrichtungen (10, 11, 13, 14) des Fahrzeugs (39 durch die erste Regelungseinrichtung (9) oder durch die zweite Regelungseinrichtung (12) zur Beeinflussung der Fahrzeuglängsdynamik und der Fahrzeugquer-dynamik ansteuerbar sind.

4. Verfahren nach einem der vorhergehenden Ansprüche, **dadurch gekennzeichnet, dass** die erste Regelungseinrichtung (9) von der zweiten Regelungseinrichtung (12) unabhängig arbeitet.

5. Verfahren nach einem der vorhergehenden Ansprüche, **dadurch gekennzeichnet, dass** die Energieversorgung der ersten Regelungseinrichtung (9) unabhängig von der Energieversorgung der zweiten Regelungseinrichtung (12) ist.

6. Verfahren nach einem der vorhergehenden Ansprüche, **dadurch gekennzeichnet, dass** die Kommunikationseinrichtungen zwischen der ersten Regelungseinrichtung (9) und den Aktoreinrichtungen (10, 11, 13, 14) zur Fahrzeugführung unabhängig von den Kommunikationseinrichtungen zwischen der zweiten Regelungseinrichtung (12) und den Aktoreinrichtungen (10, 11, 13, 14) zur Fahrzeugführung sind.

7. Verfahren nach einem der vorhergehenden Ansprüche, **dadurch gekennzeichnet, dass** die Fahrzeugumfeldsituation im Sicherheitsfall Signale von einem weiteren Umfeldsensor (15) oder mehreren weiteren Umfeldsensoren (15) erhält, mit dem bzw. denen eine Notbremsfunktion betrieben wird um eine Kollision im Sicherheitsfall zu vermeiden bzw. deren Folgen zu mindern.

8. Vorrichtung zum Betreiben eines Kraftfahrzeugs (3) in einem automatisierten Fahrbetrieb, aufweisend:
- ein Sensoreinrichtung (7),
- eine Ermittlungseinrichtung zur Trajektorienplanung (8),
- eine erste Regelungseinrichtung (9), deren Signale an Aktoreinrichtungen (10, 11, 13, 14) des Fahrzeugs (3) zur Fahrzeugführung auf Basis der Standardtrajektorie (4) weiterleitbar sind und
- eine zweite Regelungseinrichtung (12), deren Signale an Aktoreinrich-tungen (10, 11, 13, 14) des Fahrzeugs (3) zur Fahrzeugführung auf Basis der Sicherheitstrajektorie (5) weiterleitbar sind,
- eine Fehlerüberwachungseinrichtung
**dadurch gekennzeichnet, dass** die **Fehlerübwerachungseinrichtung** bei Erkennen des Sicherheitsfalls, wenn der automatisierte Fahrbetrieb nicht sichergestellt werden kann, die Aktoreinrichtungen (10, 11, 13, 14) nicht mehr durch die erste Regelungseinrichtung (9) wie im Standardbetrieb angesteuert werden sondern durch die zweite Regelungseinrichtung (12) angesteuert werden, wodurch das Fahrzeug (3) ohne Gefährdung angehalten werden kann.

9. Vorrichtung nach Anspruch 8, **dadurch gekennzeichnet, dass** die erste Regelungseinrichtung (9) von der zweiten Regelungseinrichtung (12) unabhängig ist.

10. Vorrichtung nach Anspruch 8 oder 9, **dadurch gekennzeichnet, dass** die Energieversorgung, an die die erste Regelungseinrichtung (9) angeschlossen ist von der Energieversorgung, an die die zweite Regelungseinrichtung (12) angeschlossen ist, unabhängig ist.

11. Vorrichtung nach einem der Ansprüche 8 bis 10, **dadurch gekennzeichnet, dass** der zweiten Regelungseinrichtung (12) Signale eines weiteren Umfeldsensors (15) oder mehrerer weiteren Umfeldsensorsensoren (15) zuführbar sind.

12. Verfahren nach Anspruch 11, **dadurch gekennzeichnet, dass** in der zweiten Regelungseinrichtung (12) mit den Signalen des weiteren Umfeldsensors (15) oder der mehreren weiteren Umfeldsensorsensoren (15) eine Notbremsfunktion betrieben wird um eine Kollision im Sicherheitsfall zu vermeiden bzw. deren Folgen zu mindern.

## Claims

1. Method for operating a motor vehicle (3) in an automated driving mode, comprising the steps:
- determining a standard trajectory (4), which implements vehicle guidance according to the target setting predefined by the driver and the instantaneous vehicle surroundings situation, and
- determining a safety trajectory (5) which implements safe stopping of the vehicle (3) as a function of the instantaneous vehicle surroundings situation, in the event of an emergency,
- feeding in the standard trajectory (4) to a first closed-loop control device (9) by means of which the signals can be passed on to actuator devices (10, 11, 13, 14) of the vehicle (3) in order to guide the vehicle on the basis of the standard trajectory (4), and
- feeding the safety trajectory (5) to a second closed-loop control device (12) by means of which signals can be passed on to actuator devices (10, 11, 13, 14) of the vehicle (3) in order to guide the vehicle on the basis of the safety trajectory (5),
**characterized in that**
- in the standard operating mode the actuator devices (10, 11) for guiding the vehicle are actuated by the first closed-loop control device (9), and
- if the automated driving mode cannot be ensured in the event of an emergency, the actuator devices (13, 14) are actuated by the second closed-loop control device (12) in order to stop the vehicle (3) without danger.

2. Method according to Claim 1, **characterized in that** the stopping of the vehicle (3) is carried out by means of the safety trajectory (5) which has already been fed to the second closed-loop control device (12) when the emergency event occurs.

3. Method according to Claim 1 or 2, **characterized in that** the actuator devices (10, 11, 13, 14) of the vehicle (39) can be actuated by the first closed-loop control device (9) or by the second closed-loop control device (12) in order to influence the vehicle longitudinal dynamics and the vehicle lateral dynamics.

4. Method according to one of the preceding claims, **characterized in that** the first closed-loop control device (9) operates independently of the second closed-loop control device (12).

5. Method according to one of the preceding claims, **characterized in that** the power supply of the first closed-loop control device (9) is independent of the power supply of the second closed-loop control device (12).

6. Method according to one of the preceding claims, **characterized in that** the communication devices between the first closed-loop control device (9) and the actuator devices (10, 11, 13, 14) for guiding the vehicle are independent of the communication devices between the second closed-loop control device (12) and the actuator devices (10, 11, 13, 14) for guiding the vehicle.

7. Method according to one of the preceding claims, **characterized in that** in the event of an emergency the vehicle surroundings situation receives signals from a further surroundings sensor (15) or a plurality of further surroundings sensors (15) with which an emergency braking function is operated in order to avoid a collision in the event of an emergency or reduce the consequences thereof.

8. Device for operating a motor vehicle (3) in an automated driving mode, comprising:
- a sensor device (7),
- a determining device for trajectory planning (8),
- a first closed-loop control device (9), whose signals can be passed on to actuator devices (10, 11, 13, 14) of the vehicle (3) in order to guide the vehicle on the basis of the standard trajectory (4), and
- a second closed-loop control device (12), whose signals can be passed on to actuator devices (10, 11, 13, 14) of the vehicle (3) in order to guide the vehicle on the basis of the safety trajectory (5),
- a fault monitoring device,
**characterized in that** the fault monitoring device, if the automated driving mode cannot be ensured when the emergency is detected, the actuator devices (10, 11, 13, 14) are no longer actuated by the first closed-loop control device (9) as in the standard operating mode but instead are actuated by the second closed-loop control device (12), as a result of which the vehicle (3) can be stopped without danger.

9. Device according to Claim 8, **characterized in that** the first closed-loop control device (9) is independent of the second closed-loop control device (12).

10. Device according to Claim 8 or 9, **characterized in that** the power supply to which the first closed-loop control device (9) is connected is independent of the power supply to which the second closed-loop control device (12) is connected.

11. Device according to one of Claims 8 to 10, **characterized in that** signals of a further surroundings sensor (15) or a plurality of further surroundings sensor sensors (15) can be fed to the second closed-loop control device (12).

12. Method according to Claim 11, **characterized in that** an emergency braking function is operated in the second closed-loop control device (12) with the signals of the further surroundings sensor (15) or the plurality of further surroundings sensor sensors (15), in order to avoid a collision in the event of an emergency or to reduce the consequences thereof.

## Revendications

1. Procédé de mise en fonctionnement d'un véhicule automobile (3) dans un mode de conduite automatique, comprenant les étapes suivantes :
- détermination d'une trajectoire standard (4) qui met en oeuvre un guidage du véhicule conformément à un réglage de la destination prédéfini par le conducteur et à la situation momentanée dans l'environnement du véhicule et
- détermination d'une trajectoire de sécurité (5) qui met en oeuvre un arrêt sécurisé du véhicule (3) dans le cas d'une urgence en fonction de la situation momentanée dans l'environnement du véhicule,
- acheminement de la trajectoire standard (4) à un premier dispositif de régulation (9), par le biais duquel les signaux peuvent être retransmis à des dispositifs actionneurs (10, 11, 13, 14) du véhicule (3) en vue du guidage du véhicule sur la base de la trajectoire standard (4) et
- acheminement de la trajectoire de sécurité (5) à un deuxième dispositif de régulation (12), par le biais duquel des signaux peuvent être retransmis aux dispositifs actionneurs (10, 11, 13, 14) du véhicule (3) en vue du guidage du véhicule sur la base de la trajectoire de sécurité (5)
**caractérisé en ce que**
- en fonctionnement standard, les dispositifs actionneurs (10, 11) servant au guidage du véhicule sont commandés par le premier dispositif de régulation (9) et
- dans une situation de sécurité, lorsque le mode de conduite automatique ne peut plus être garanti, les dispositifs actionneurs (13, 14) sont commandés par le deuxième dispositif de régulation (12) afin d'arrêter le véhicule (3) sans danger.

2. Procédé selon la revendication 1, **caractérisé en ce que** l'arrêt du véhicule (3) s'effectue au moyen de la trajectoire de sécurité (5) déjà acheminée au deuxième dispositif de régulation (12) lorsque la situation de sécurité survient.

3. Procédé selon la revendication 1 ou 2, **caractérisé en ce que** les dispositifs actionneurs (10, 11, 13, 14) du véhicule (39 peuvent être commandés par le premier dispositif de régulation (9) ou par le deuxième dispositif de régulation (12) en vue d'influencer la dynamique longitudinale du véhicule et la dynamique transversale du véhicule.

4. Procédé selon l'une des revendications précédentes, **caractérisé en ce que** le premier dispositif de régulation (9) fonctionne indépendamment du deuxième dispositif de régulation (12).

5. Procédé selon l'une des revendications précédentes, **caractérisé en ce que** l'alimentation en énergie du premier dispositif de régulation (9) est indépendante de l'alimentation en énergie du deuxième dispositif de régulation (12).

6. Procédé selon l'une des revendications précédentes, **caractérisé en ce que** les dispositifs de communication entre le premier dispositif de régulation (9) et les dispositifs actionneurs (10, 11, 13, 14) servant au guidage du véhicule sont indépendants des dispositifs de communication entre le deuxième dispositif de régulation (12) et les dispositifs actionneurs (10, 11, 13, 14) servant au guidage du véhicule.

7. Procédé selon l'une des revendications précédentes, **caractérisé en ce que** la situation dans l'environnement du véhicule dans la situation de sécurité reçoit des signaux d'un capteur d'environnement (15) supplémentaire ou de plusieurs capteurs d'environnement (15) supplémentaires avec lequel ou lesquels est opérée une fonction de freinage d'urgence afin d'éviter une collision dans une situation de sécurité ou de minimiser ses conséquences.

8. Dispositif destiné à mettre en fonctionnement un véhicule automobile (3) dans un mode de conduite automatique, comprenant :
- un dispositif capteur (7),
- un dispositif de détermination pour la planification de la trajectoire (8),
- un premier dispositif de régulation (9) dont les signaux peuvent être retransmis à des dispositifs actionneurs (10, 11, 13, 14) du véhicule (3) en vue du guidage du véhicule sur la base de la trajectoire standard (4) et
- un deuxième dispositif de régulation (12) dont les signaux peuvent être retransmis aux dispositifs actionneurs (10, 11, 13, 14) du véhicule (3) en vue du guidage du véhicule sur la base de la trajectoire de sécurité (5),
- un dispositif de surveillance des défauts **caractérisé en ce que** le dispositif de surveillance des défauts, en cas de reconnaissance d'une situation de sécurité, lorsque le mode de conduite automatique ne peut pas être garanti, n'amène plus les dispositifs actionneurs (10, 11, 13, 14) à être commandés par le premier dispositif de régulation (9) comme en fonctionnement standard, mais par le deuxième dispositif de régulation (12), le véhicule (3) pouvant ainsi être arrêté sans danger.

9. Dispositif selon la revendication 8, **caractérisé en ce que** le premier dispositif de régulation (9) est indépendant du deuxième dispositif de régulation (12).

10. Dispositif selon la revendication 8 ou 9, **caractérisé en ce que** l'alimentation en énergie à laquelle est raccordé le premier dispositif de régulation (9) est indépendante de l'alimentation en énergie à laquelle est raccordé le deuxième dispositif de régulation (12).

11. Dispositif selon l'une des revendications 8 à 10, **caractérisé en ce que** des signaux d'un capteur d'environnement (15) supplémentaire ou de plusieurs capteurs de capteurs d'environnement (15) supplémentaires peuvent être acheminés au deuxième dispositif de régulation (12).

12. Dispositif selon la revendication 11, **caractérisé en ce que** dans le deuxième dispositif de régulation (12), les signaux du capteur d'environnement (15) supplémentaire ou des plusieurs capteurs de capteurs d'environnement (15) supplémentaires servent à opérer une fonction de freinage d'urgence afin d'éviter une collision dans une situation de sécurité ou de minimiser ses conséquences.
